(19)

Europäisches
Patentamt
European
Patent Office
Office européen
des brevets

(11)  **EP 2 993 944 A1**

(12)  **EUROPEAN PATENT APPLICATION**

(43) Date of publication:
**09.03.2016  Bulletin 2016/10**

(51) Int Cl.:
*H04W 52/02* (2009.01)

(21) Application number: **14306360.0**

(22) Date of filing: **04.09.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
• **Venkateswaran, Vijay
  Dublin, 15 (IE)**
• **Kucera, Stepan
  Dublin, 15 (IE)**

(74) Representative: **Greenwood, Matthew David et al
Bryers LLP
7 Gay Street
Bath BA1 2PH (GB)**

(54)  **Low power transceiver for femtocells in sleep mode**

(57)      A transceiver for controlling a first network node, comprising a detector operable to detect the presence of or a control signal from a second network node or a user equipment (UE), a broadcast signal generator to generate first and second downlink physical channel broadcast signals periodically or in response to the detected control signal, and a controller operable to enable the first network node from an inactive state so as to serve the UE in response to a node selection signal from the UE.

Figure 10

**Description**

TECHNICAL FIELD

Aspects relate, in general, to a transceiver for controlling a network node, a network node, telecommunications system and communication method.

BACKGROUND

Small cells are low power, low-cost base stations that are able to provide cellular service in residential or enterprise environments, with a typical coverage range of tens of metres. They have auto-configuration and self-optimization capabilities that enable a simple plug and play deployment, and are designed to automatically integrate themselves into an existing macrocellular network. Small cells, sometimes referred to as femtocells, typically use the customer's broadband internet connection, for example DSL, cable or the like, as backhaul towards the macrocellular network.

Adoption small cells by wireless operators is widespread and with the increasing rate of adoption, the ability to integrate deployed small cells into the existing macrocellular network as seamlessly as possible is becoming increasingly important.

The numbers of small cells in densely populated areas can outnumber the hosting macro cells by a factor of 5 to 10 or more per macro cell sector. The installation cost and the power consumption associated with these small cells can be significant. Therefore, it is desirable to reduce the installation effort and power consumption of these small cells as much as possible. This can be achieved by minimizing backhaul installation by using wireless backhaul, instead of cable/fibre based backhaul, and by reducing power supply installation, for example by using an autonomous source of locally sustainable energy (e.g., solar panels or energy harvesting devices) in combination with storage/back-up battery, instead of cable-connected external power supply.

Small cell base stations operating on the basis of sustainable energy sources may sometimes referred to as energy-sustaining small cells (ESSCs). However, sources of sustainable energy typically do not allow for an uninterrupted duty cycle. Therefore, ESSCs are expected to be activated only on a need-to-communicate basis, e.g., when a nearby mobile device requests large throughput, or if a mobile terminal is located in an area served badly by the hosting macro cell. Generally speaking, ESSCs will remain in a sleep mode for most of their deployment time, while harvesting external energy (e.g., solar and wind energy) and storing it in a battery.

SUMMARY

According to an example, there is provided a transceiver for controlling a first network node, comprising a detector operable to detect the presence of or a control signal from a second network node or a user equipment (UE), a broadcast signal generator to generate first and second downlink physical channel broadcast signals periodically or in response to the detected control signal, and a controller operable to enable the first network node from an inactive state so as to serve the UE in response to a node selection signal from the UE. The first downlink physical channel broadcast signal is a primary synchronisation signal and the broadcast signal generator can synchronise a sequence for the primary synchronisation signal using a clock signal of the first network node. The second downlink physical channel broadcast signal is a secondary synchronisation signal and the broadcast signal generator can generate a sequence for the secondary synchronisation signal using a polynomial generator synchronised with a clock signal of the first network node. The broadcast signal generator can generate the sequence using a lookup table. The broadcast signal generator can generate multiple common reference symbols to be broadcast using the transceiver for channel estimation at the UE. The transceiver can receive a master clock signal from the second node.

According to an example, there is provided a transceiver for controlling a first network node, comprising a detector operable to detect the presence of or a control signal from a second network node or a user equipment (UE), a controller operable to generate first and second downlink physical channel broadcast signals periodically or in response to the detected control signal, and to enable the first network node from an inactive state so as to serve the UE in response to a node selection signal from the UE.

According to an example, there is provided a first node in a telecommunications system, the first node comprising a transceiver for controlling the first node, the transceiver including a detector operable to detect the presence of or a control signal from a second network node or a user equipment (UE), a broadcast signal generator to generate first and second downlink physical channel broadcast signals periodically or in response to the detected control signal, and a controller operable to enable the first node so as to serve the UE in response to a node selection signal from the UE. An autonomous sustainable energy source operable to power the first node can be provided. The first node can communicate with a core network portion of the telecommunications system using a wireless backhaul.

According to an example, there is provided a telecommunications system, comprising a second network node,

and a first network node including a transceiver for controlling the first node, the transceiver including a detector operable to detect the presence of or a control signal from the second network node or a user equipment (UE), a broadcast signal generator to generate first and second downlink physical channel broadcast signals periodically or in response to the detected control signal, and a controller operable to enable the first node so as to serve the UE in response to a node selection signal from the UE. A wireless backhaul between a core network portion of the system and the first network node can be provided.

According to an example, there is provided a method, in a telecommunications system, for activating a first node, the method comprising detecting the presence of or a control signal from a second network node or a user equipment (UE) at the first node, generating first and second downlink physical channel broadcast signals periodically or in response to the detected control signal, receiving a node selection signal from the UE at the first node, and activating the first node so as to serve the UE in response to the selection signal. The first and second downlink physical channel broadcast signals can be primary and secondary synchronisation signal generated using a broadcast signal generator of a transceiver of the first node. The method can further comprise synchronising a sequence for the primary synchronisation signal using a clock signal of the first network node. The method can further comprise generating a sequence for the secondary synchronisation signal using a polynomial generator synchronised with a clock signal of the first network node.

BRIEF DESCRIPTION OF THE DRAWINGS

Embodiments will now be described, by way of example only, with reference to the accompanying drawings, in which:

Figure 1 is a schematic representation of an example of a telecommunications network comprising a plurality of ESSCs and a macro cell;

Figure 2 is a schematic representation of a heterogeneous network according to an example;

Figure 3 is a schematic representation of an ultra-low power transceiver (ULPT) and an according to an example;

Figure 4 is a schematic representation of a ULPT according to an example;

Figures 5a and 5b are schematic representations of the PSS and SSS structure in in the Frequency-division duplexing (FDD) case Time-division duplexing (TDD) case respectively;

Figures 6a and 6b are schematic representations according to two different examples for generating PSS sequences;

Figure 7 is a schematic representation of the generation of an m-sequence for an SSS signal according to an example;

Figure 8 is a schematic representation of a method of scrambling generated m-sequences for an SSS signal according to an example;

Figure 9 is a schematic representation of a CRS signal generator according to an example; and

Figure 10 is a schematic representation of a message flow according to an example.

DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

A mass small cell (SC) deployment in a heterogeneous telecommunications network for example can be costly in view of the need to wide-scale provision suitable deployment sites with available power supply and sufficient backhaul capacity. To reduce the costs of installation and backhauling, as well as power consumption of such SC deployments, a network operator can use wireless backhaul instead of cable-based or fiber-based backhaul and an autonomous sustainable energy source (e.g., solar panels or energy harvesting devices) in combination with a storage/back-up battery instead of an external power supply.

Such small cells operating on autonomous energy source are referred to as energy sustaining SC (ESSC).

In an example, in order to save power, ESSCs are in default sleep mode and activated only when needed, e.g. when a nearby mobile device requests large throughput, or if a mobile terminal is located in an area served badly by the hosting macro cell. When an ESSC is in a sleep mode, transceiver circuitry of the ESSC is turned off (i.e., no transmission whatsoever) leading to minimum power consumption, allowing energy harvesting (e.g., solar energy) for storage in a battery.

In ESSC-based architectures network users are typically unaware of the presence of sleeping ESSCs. Hence, users cannot establish a communication link with them when they are an in idle state (e.g. RRC_IDLE in LTE), nor perform a handover when in an active state (e.g. RRC_CONNECTED in LTE). Thus, according to an example, a standard-compliant mechanism that allows network users to efficiently discover a sleeping ESSC, synchronize with it and estimate the ESSC coverage as well as channel quality so that the best-serving ESSC can be woken up for communication purposes in a targeted fashion is provided.

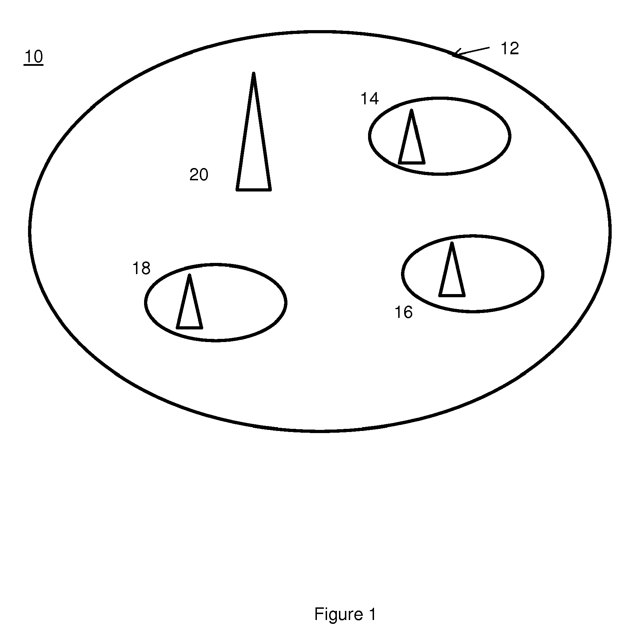

Figure 1 is a schematic representation of an example of a telecommunications network comprising a plurality of ESSCs and a macro cell. More particularly, figure 1 illustrates a heterogeneous telecommunications network 10 comprising a macro cell with a coverage area 12 and a plurality of energy sustaining small cells (ESSCs). The ESSCs comprises a first ESSC 14, a second ESSC 16 and a third ESSC 18. The ESSCs are distributed geographically to provide an area of coverage within the macro cell 12. User equipment may roam through the network 10. When the user equipment is located within the macro cell 12, communications may be established between the user equipment and the macro cell base station 20 over an associated radio link. If a user equipment is located geographically within one of the ESSCs 14, 16, 18, communications may be established between the user equipment and the base station of the associated ESSC over an associated radio link. Of course, it will be appreciated that Figure 1 shows only an example heterogeneous network and that a plurality of macro cells may be provided, and more or less than three ESSCs may be provided.

The ESSCs cells provide local communications coverage for a user in their vicinity. As a user equipment comes within range of an ESSC, such as the first ESSC 14, a handover may occur between the base station 20 of the macro cell and the base station of the first ESSC 14, when the base station of the first ESSC detects that user equipment has come within range. Likewise, as a user equipment comes within range of a different small cell, a handover may occur between the base station of the current small cell and the base station of the new small cell, when the base station of the new small cell detects that user equipment has come within range.

According to an example, a hybrid RF-Digital hardware architecture to realize an ultra-low power transceiver (ULPT) is provided. The transceiver can operate at a fraction of the power consumed in a femto cell, and enable network user to discover a sleeping ESSC, synchronize with it and estimate its channel quality without waking it up. In an example, standard LTE cell-selection procedures in both current LTE cellular networks (LTE Release 12) and future cellular LTE networks with a split control plane and data plane can be used. In particular, the structure of the synchronization sequences and reference symbols used for a cell selection process are leveraged, and RF and digital ULPT architectures are provided that are capable of efficiently generating and broadcasting the following 3GPP-standardized LTE synchronization and acquisition signals, namely:

- primary synchronization signal (PSS),
- secondary synchronization sequence (SSS),
- common reference signal (CRS),
- CSI-RS signal (CSI-RS), and
- Primary broadcast (PBCH) signal.

Accordingly, a transceiver is provided that enables an ultra-low power architecture to enable entire wireless access control at an ESSC without the need to wake the small cell.

In an example, a digital part of a transceiver can include a low power microcontroller and low complexity DSP circuits that can be used to generate the maximal-length sequences (M-sequences) for the static SSS and CRS signals for a given cell identity. An RF part can consist of a wideband synthesizer (WBS) without any power amplifier, that can be used for up-conversion, RF amplification with multiple amplitude levels (without using power amplifiers in an ULPT), and dynamic reconfiguration of cell identity, resource blocks, antenna setup and other network level commands.

For PSS generation and broadcasting, an RF domain PSS generator can be used with a digitally controlled RF-WBS. In an example, an exponentially coded sequence can be stored in a look-up table (LUT) inside or accessible to the ULPT. In another example, an IFFT modulated OFDM sequence of PSS can be used. In terms of SSS generation and broadcasting, a Boolean M-sequence can be generated from its generator polynomial and followed by standard QPSK modulation to obtain 3GPP compatible SSS. In an example, a Boolean M-sequence can be generated using a generator polynomial and cell identity. The M-sequence can be used with an RF-WBS to transmit in appropriate resource blocks. In an alternative example, each M-sequence can be combined with scrambling codes (Gold codes), synchronized with frame and sub-frame level. Synchronization time instants are different for TDD and FDD access (performed in RF with RF-WBS).

In terms of CRS generation, digital M-sequences obtained in the intermediate steps of SSS design are QPSK modulated, followed by a phase shift of pi/2 and mod-2 addition of cell-identity offsets to generate the CRS signal. In an example, phase shift in RF domain can be performed using an electronic phase shifter, varactor diode or phase offset in RF-WBS. Subsequently frequency shifts can be performed in RFWBS for a given cell identity, antenna port and so on. In an example, a shift register output can be QPSK modulated and an M-sequence to QPSK modulator consisting only of adders and phase shift operators to enable efficient QPSK modulation can be provided. Additionally, these sequences can be interleaved in time and frequency to account for the time and frequency resource blocks. In an example, the interleaving is a function of the cell identity and the antenna used in a base station and can be incorporated in the CRS design.

PBCH is decomposed into a static version PBCH with a fixed MIB (emulated similarly to PSS) and a full version of the PBCH. Two variations of static PBCH are provided according to an example, in a similar manner to that described above with reference to PSS.

In an example, in addition to cell selection, a ULPT arrangement can be used to track a user's location and mobility and predict their behaviour and so on when the main cell/ESSC is asleep or in an ultra-low power mode of operation.

Typically, a user (UE) that is not already camping on or connected to an LTE cell automatically engages in an initial cell search in order to find the most suitable cell in the network for handling the UE's outgoing data and announce any incoming traffic. The cell search procedure begins with a synchronization procedure which makes use of two specially designed physical signals that are broadcast in each cell: the Primary Synchronization Signal (PSS) and the Secondary Synchronization Signal (SSS).

The detection of these two signals not only enables time and frequency synchronization, but also provides the UE with the physical layer identity of the cell and the cyclic prefix length, and informs the UE whether the cell uses Frequency Division Duplex (FDD) or Time Division Duplex (TDD).

After detecting the synchronization signals, the UE decodes the Physical Broadcast CHannel (PBCH), from which critical system information such as bandwidth and frame number is obtained. This information is necessary to initiate the actual random access procedure that establishes a connection to the cell.

An already active UE can also be instructed to assist in the identification and evaluation of neighbouring cells, primarily for handover purposes. In such a case, the UE does not need to decode the PBCH; it simply makes quality-level measurements based on the reference signals transmitted from the newly detected cell.

According to an example, an ULPT broadcasts the PSS, SSS, and RS signals on behalf of a sleeping ESSC. The ULPT broadcast can be initiated by a detector, such as a sniffer device, that has detected an active UE in the cell vicinity, or by a command of a serving gateway. In an example, the ULPT enables a UE to perform a cell search/selection process without the ESSC being involved, and without the ESSC therefore needing to be enabled or woken from a low power state.

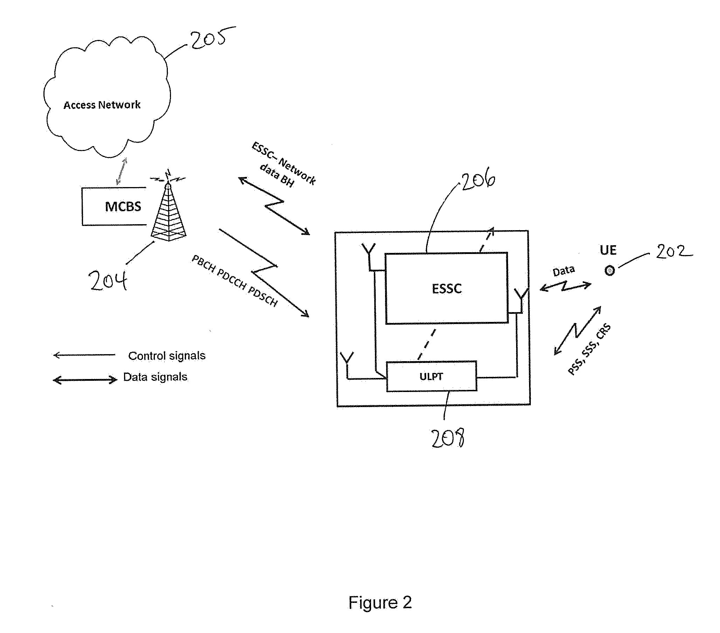

Figure 2 is a schematic representation of a heterogeneous network according to an example. A user equipment (UE) 202 would like to establish a communication link to a macro-cell base station 204. The macro cell base station 204 is in communication with an access network 205. Compared to a small cell, the macro cell provides for a wider coverage range, but only a limited capacity, mainly due to the larger number of connected UEs and the larger separation distances from its UEs.

The network also contains an ESSC 206 whose default mode is sleep. The ESSC 206 may be in sleep mode over 90% of time for example. The limited ESSC coverage is contained within the macro cell coverage. Given its closer physical proximity to the UE 202, the ESSC 206 can serve high-rate users. The ESSC 206 may be powered by energy scavenging, such as solar, wind energy and/or battery as described above.

The ESSC 206 may be asleep most of the time and is connected to an ultra low powered transceiver (ULPT) 208 according to an example. This ULPT 208 is always turned on to sense the overall network, and listen for wake-up signals/beacon signals/control signals from either the UE 202 or the macro cell base station 204. Note that the ULPT 208 only listens to the signals from the base station and operates at a fraction of the overall power. The ULPT 208 is responsible for enabling or turning the ESSC 206 on when required by the macro cell base station 204 or UE 202 to enable high-data rate communication of the UE 202.

In an example, the ULPT 208 has ultra-low power consumption while it senses for signals from the UE 202 and/or the access network 205. Thus, the components of ULPT 208 may be limited to energy detectors, passive circuits (RF filters) and a low-power microcontroller with power consumption in the order of milliWatts and can be powered by a small solar panel.

The network connections between the proposed ESSC 206 and ULPT 208, the access network 205 and the UE 202 are shown in Figure 2. The ULPT 208 transmits first and second downlink physical channel broadcast signals, such as the primary synchronization signal (PSS), secondary synchronization signal (SSS), as well as CRS and broadcast channel (BCH) signals.

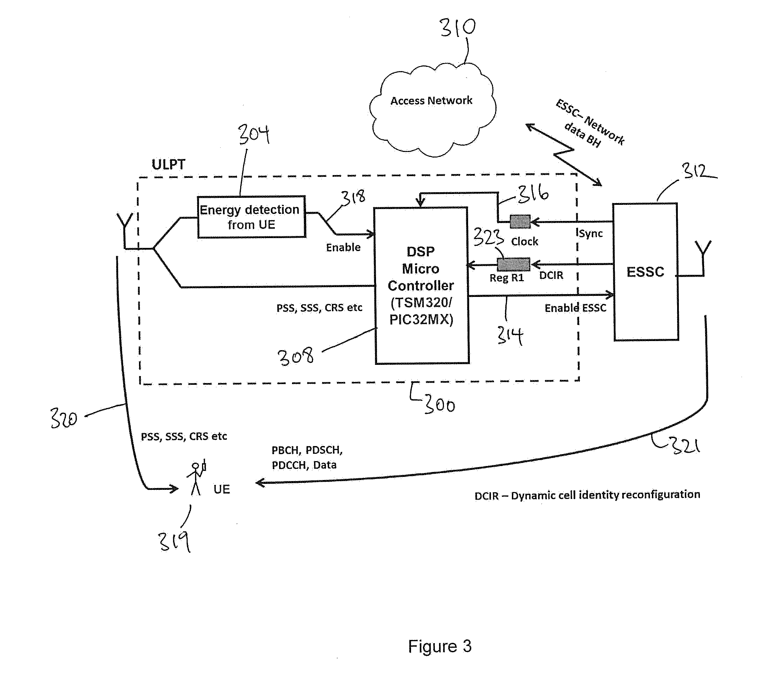

Figure 3 is a schematic representation of an ultra-low power transceiver (ULPT) according to an example. ULPT 300 comprises an energy detector 304 and a microcontroller 308 to manage control plane operations. The energy detector 304, which can be a sniffer for example, can be used to detect the control signals from either a UE or the access network/backhaul 310. Note that the access network and UE might communicate in two different frequencies, for this reason the energy detector block may consist of two or more energy detectors and filters depending on their frequencies and bandwidth of operation.

Controller 308 can enable the ESSC 312 using an enable signal 314. A clock signal 316, which can be a master clock signal synchronised with the access network 310 via ESSC 312 is provided to controller 308. In an example, controller 308 acts as a broadcast signal generator to generate first and second downlink physical channel broadcast signals, such as PSS and SSS. The signals can be generated periodically or in response to a detected control signal 318 from device 304 in response to the detected presence of a UE 319 for example. In an alternative example, a broadcast signal generator can be separate device, such as a programmable device for example.

ULPT 300 is operable to generate PSS, SSS and CRS signals 320 to enable UE 319 to synchronise without ESSC 312 having to be woken or enabled from its low power state. In response to signal 314, the ESSC can be enabled, such as once synchronisation with UE 319 is performed, and ESSC can thereafter communicate with UE 319 as normal by communicating 321 with UE 319. In an example, data in connection with a dynamic cell identity reconfiguration can be used to update a register 323 that can be used by controller 308.

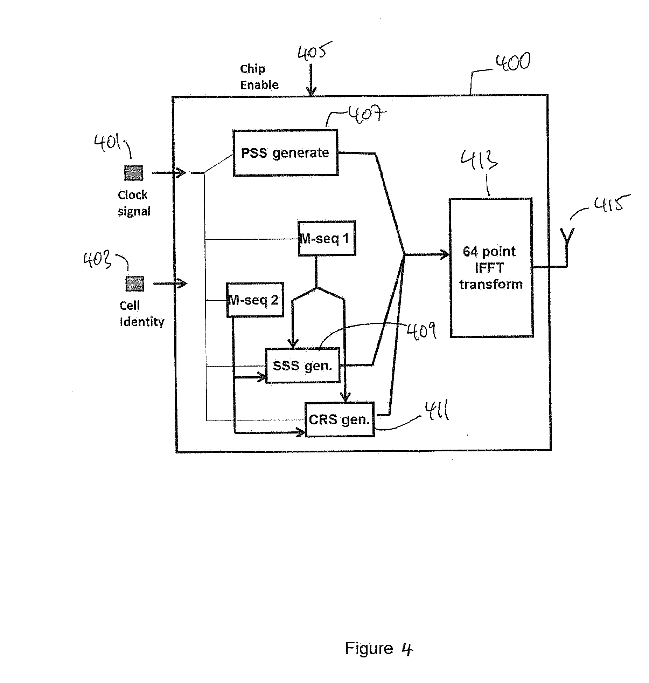

Figure 4 is a schematic representation of a ULPT controller portion according to an example. As noted above, ULPT 300 uses a microcontroller to generate PSS, SSS, CRS and PBCH signals in order to synchronize and select a cell. The low-power operation of ULPT 300 can be achieved by designing each sub-block as depicted in figure 4 to exploit the sequence structure leading to a low-complexity realization. As can be seen from figure 4, a clock signal 401, cell identity signal 403 and chip enable signal 405 can be input to controller 400. PSS generation block 407 generates a sequence for a PSS signal. SSS generation block 409 generates a sequence for an SSS signal, and CRS generation block 411 generates a sequence for a CRS signal. These signals can be input to a transform block 413 that can perform a 64 point inverse fast Fourier transform (IFFT) to generate an output signal from controller 400 to be transmitted using an antenna 415 for example.

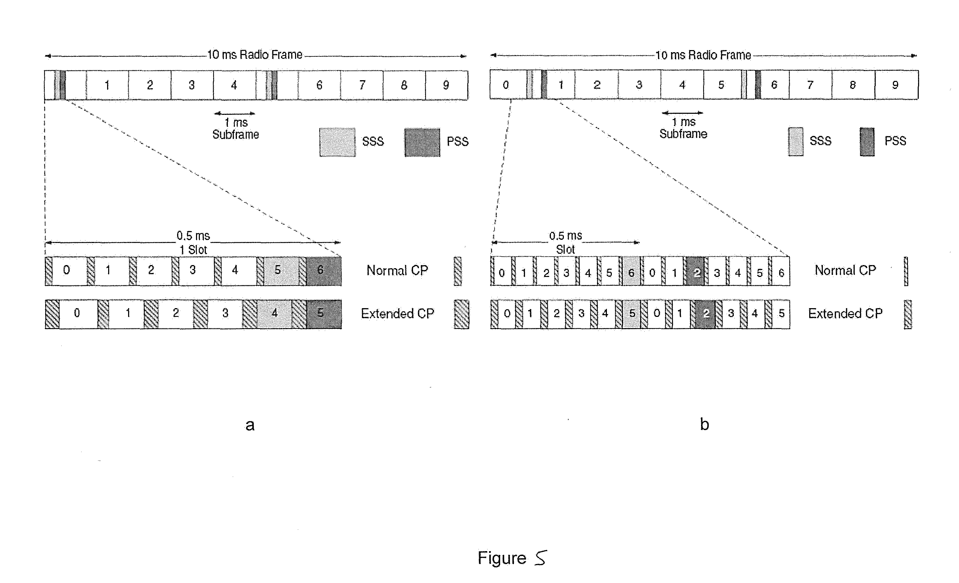

Figures 5a and 5b are schematic representations of the PSS and SSS structure in in the Frequency-division duplexing (FDD) case Time-division duplexing (TDD) case respectively. The synchronization signals are transmitted periodically, twice per 10ms radio frame. In an FDD cell, the PSS is always located in the last OFDM (Orthogonal Frequency Division Multiplexing) symbol of the first and 11th slots of each radio frame, thus enabling the UE to acquire the slot boundary timing independently of the Cyclic Prefix (CP) length. The SSS is located in the symbol immediately preceding the PSS to enable coherent detection of the SSS relative to the PSS. In a TDD cell, the PSS is located in the third symbol of the 3rd and 13th slots, while the SSS is located three symbols earlier.

PSS is the same in a given cell in which it is transmitted. The SSS transmissions in each radio frame change in a specific manner, thus enabling the UE to establish the position of the 10 ms radio frame boundary. The PSS and SSS are each comprised of a sequence of length 62 symbols, mapped to the central 62 subcarriers around the d.c. subcarrier, which is left unused. This means that the five resource elements at each extremity of each synchronization sequence are not used. Formally, the physical cell identity, $N_{ID}^{cell}$, is defined by the equation: $N_{ID}^{CELL} = 3N_{ID}^{(1)} + N_{ID}^{(2)}$, where

- $N_{ID}^{(1)}$ is the physical layer cell identity group (0 to 167); and

- $N_{ID}^{(2)}$ is the identity within the group (0 to 2).

The PSS is based on well-known Zadoff-Chu sequences:

$$d_u(n) = e^{-j\frac{\pi u(n+1)}{63}},$$

for n = 0, 1,...,30

$$d_u(n) = e^{-j\frac{\pi u(n+1)(n+2)}{63}},$$

for n = 31, 32,....,61

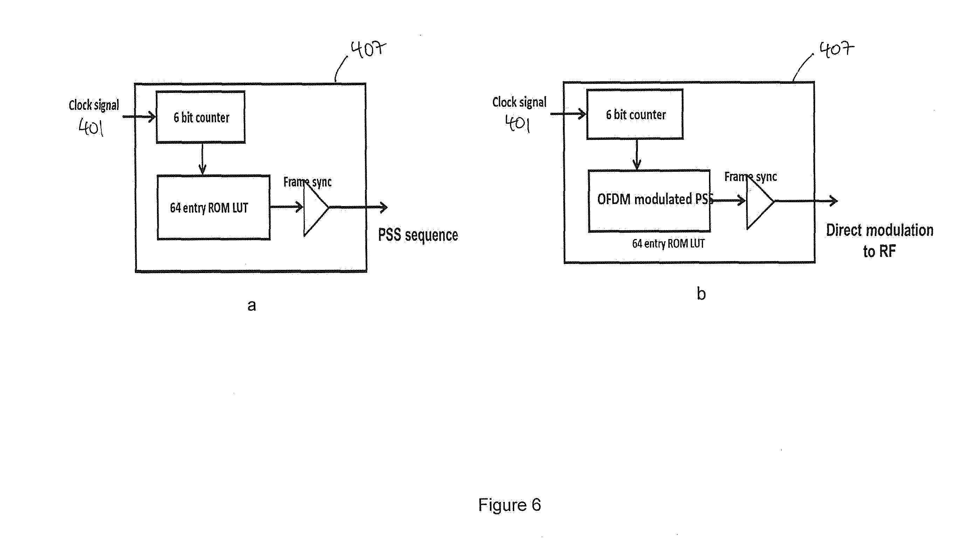

Figures 6a and 6b are schematic representations according to two different examples for block 407 of figure 4 to generate PSS sequences. In both cases, the clock signal 401 synchronizes the sequence with respect to frame level. Typically each symbol is OFDM modulated in LTE transmission, leading to circuit complexity. Note that $d_u(n)$ is an exponentially coded sequence and its PAPR will be the same as that of its OFDM modulation. This property is exploited to provide the modified PSS generation module of figure 6(b).

SSS sequences are based on maximum length sequences, known as M-sequences, that are typically specified by a unique generator polynomial in GF(2). The LTE uses a combination of three M-sequences each of length 31 (denoted $\bar{s}$, $\bar{c}$ and $\bar{z}$ ), to generate the two SSS sequences.

For the first M-sequence generation, from the generator polynomial g(x) $x^5 + x^2 + 1$, the M-sequence $\bar{s}$ is derived and subsequently different cyclic shifts of an m-sequence $s_0^{(m0)}$ and $s_1^{(m1)}$ can be provided:

$$s_0^{(m_0)} = \tilde{s}((n + m_0)\bmod 31)$$

$$s_0^{(m_1)} = \tilde{s}((n + m_1)\bmod 31)$$

The indices $m_0$ and $m_1$ are derived from the cell-identity group, $N_{ID}$.

For the second M-sequence generation, from a generator polynomial g(x) $x^5 + x^3 + 1$, the second M-sequence $\tilde{c}$ is derived and subsequently the binary scrambling codes $c_0(n)$ and $c_1(n)$ can be provided:

$$c_0(n) = \tilde{c}((n + N_{ID}^{(2)})\bmod 31)$$

$$c_1(n) = \tilde{c}((n + N_{ID}^{(2)} + 3)\bmod 31)$$

For the third M-sequence generation, from a generator polynomial $x^5 + x^4 + x + 1$, the second M-sequence $\tilde{z}$ can be derived and subsequently the binary scrambling codes $z_1^{(m_0)}$ and $z_1^{(m_1)}$ can be provided:

$$z_1^{(m_0)} = \tilde{z}((n + (m_0\bmod 8))\bmod 31)$$

$$z_1^{(m_1)} = \tilde{z}((n + (m_1\bmod 8))\bmod 31)$$

From these two M-sequences, the first SSS is obtained by scrambling the M-sequence outputs.

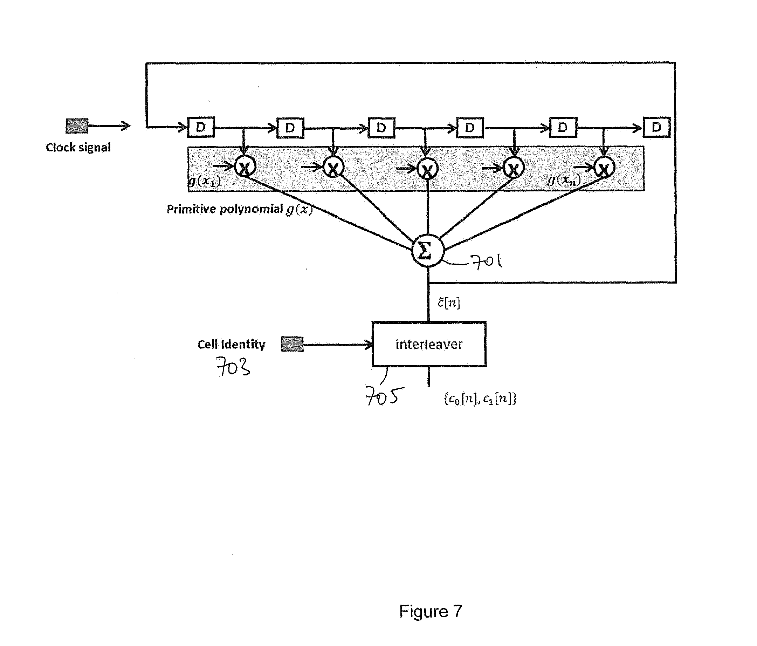

Figure 7 is a schematic representation of the generation of an m-sequence for an SSS signal according to an example. M-sequences can be obtained by circular shifts of a generator polynomial g(x). The circular shifts are summed using a modulo-2 adder 701, which can be implemented with ultra-low complexity using XOR gates for example. Note that each M-sequence is interleaved by the cell identity number 703 using an interleaver 705. For this reason, a bank of parallel shift registers that permute incoming bits in a different order specified by the cell identity is provided. The above operations can be carried out exclusively using a bank of shift registers and several logic gates, leading to significant reduction in computation complexity.

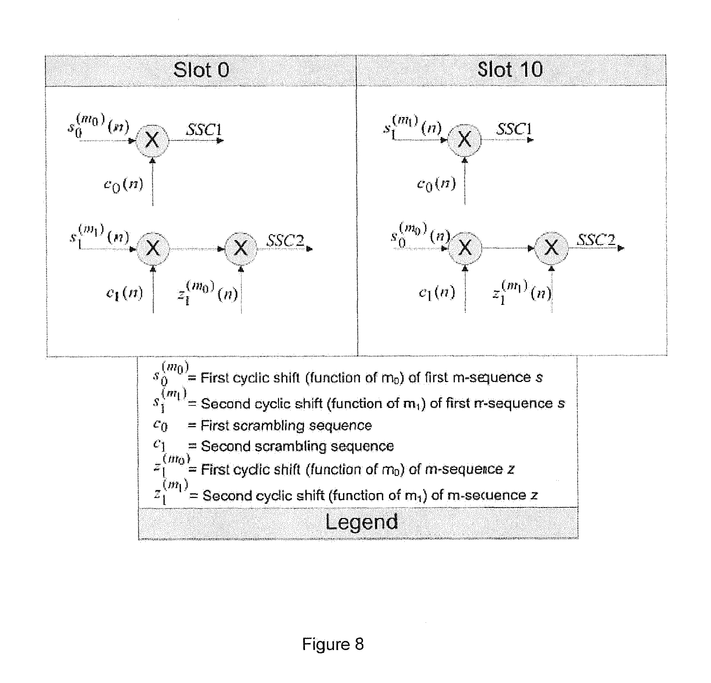

Once these M-sequences are generated, they can be scrambled with each other. For example, as shown in figure 8, which is a schematic representation of a method of scrambling generated m-sequences for an SSS signal. A low-complexity variant of module-2 multiplication instead of the standard complex multiplication done in an FPGA can be used in an example.

The scrambling operation is:

Subframe 0: $\quad d(2n) = s_0^{(m_0)}(n)c_0(n)$ $\qquad$ Subframe 0: $\quad d(2n+1) = s_1^{(m_1)}(n)c_1(n)z_1^{(m_0)}(n)$

Subframe 5: $\quad d(2n) = s_1^{(m_1)}(n)c_0(n)$ $\qquad$ Subframe 5: $\quad d(2n+1) = s_0^{(m_0)}(n)c_1(n)z_1^{(m_1)}(n)$

The SSS sequence mapping onto a corresponding sub-frame is straightforward once the clocks are synchronized as will be appreciated.

Subsequent to SSS generation, the ULPT can transmit a series of common reference symbols (CRS) for channel estimation at the UE. Note that these CRS signals are again Gold coded M-sequences with the same signature as scrambling codes $c_0(n)$ and $c_1(n)$. For this reason, these M-sequences can be re-used.

Typically the CRS is QPSK modulated. The signal can be written as:

$$r_{l,n_s}(m) = \frac{1}{\sqrt{2}}[1 - 2c(2m)] + j\frac{1}{\sqrt{2}}[1 - 2c(2m+1)]$$

where m is the index of the RS, $n_s$ is the slot number within the radio frame and '1' is the symbol number within the time slot. T he cell-specific time and frequency shift is applied for the CRS signals and antenna.

Observation of the CRS sequences reveals some interesting properties. For example, the resource blocks used for two-antenna ports (as well as 4 antenna ports) are interleaved by a constant shift of time and frequency resources. This shift is a function of the antenna ports. The same CRS signal is shifted for different antenna ports, therefore meaning that a single M-sequence generator and a single CRS generator can be used to obtain the CRS sequence for both antenna ports. Also, M-sequences $c_0(n)$ and $c_1(n)$ generated for SSS sequences can be re-used in the CRS generation allowing resources to be shared.

In this case, the successive M-sequence outputs from SSS generator can be QPSK modulated, phase shifted by 90 degrees and stored as the CRS signal. The above properties allow an ultra-low complexity CRS signal generator to be provided.

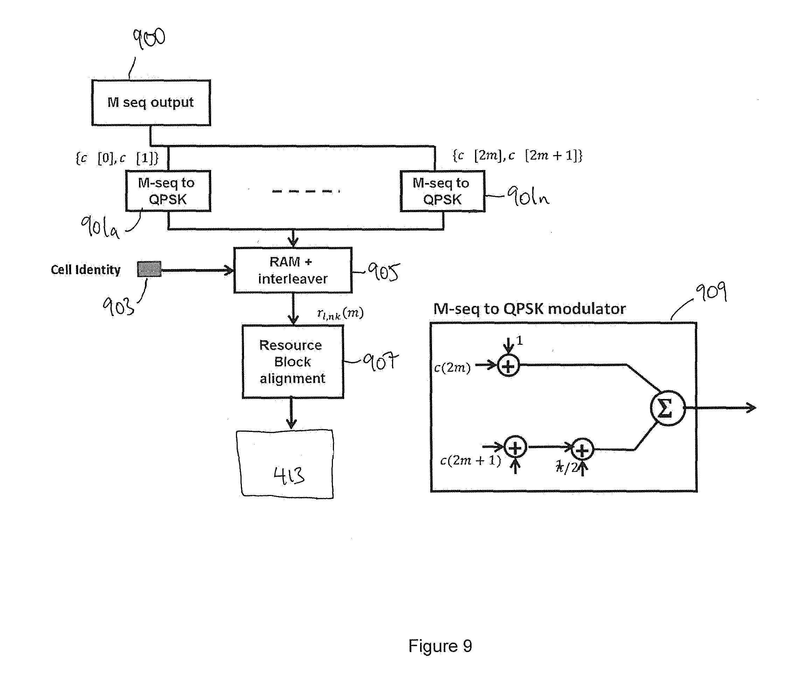

Figure 9 is a schematic representation of a CRS signal generator according to an example. Blocks 901a-n (M-Seq to QPSK) operate on the successive M-sequence outputs 900 of SSS generator to enable a phase shift of pi/2 followed by a mod-2 addition to provide the CRS signal to block 413 of figure 4 for example. The phase shift operation can be carried out either by a delay line or a carrier signal phase offset. In an example, the set of QPSK sequences can be stored in a RAM 905 and the cell identity 903 as well slot numbers can be used to finally place the CRS signals in the appropriate resource blocks in block 907. An exploded view 909 of a M-Seq to QPSK modulator block is depicted showing how the inputs are combined in more detail.

In an alternative example, the final output of the CRS sequence can be used with the IFFT operation to perform OFDM modulation. Note that this is the most complex part of the ULPT operation and this operation can be simplified by generating the M-sequence from the IFFT modulated generator polynomial. However such an operation will not be in GF(2). Alternatively, the IFFT multiplication can be replaced by a Hadamard transformation. Note that this Haramard transform of M-sequences can be represented similarly to low-complexity IFFT implementations with the additional benefit that there are no complex multiplications with the Hadamard transformation.

Similarly to that described above with reference to figure 6, a ULPT with a static version of a PBCH generator can be used to generate a static PBCH sequence containing the master information block (MIB) with information such as bandwidth, data rates, and so on. In both cases, the clock signal synchronizes the sequence with respect to frame level and transmits PBCH every 40ms for example. Typically each symbol is OFDM modulated in LTE transmission, leading to circuit complexity. Note that $d_u(n)$ is an exponentially coded sequence and its PAPR will be the same as that of its OFDM modulation. This property is exploited in the modified PSS generator shown in figure 6(b). In an example, the UE provides an ACK signal, read by the set of energy detectors inside the ULPT and subsequently enables the ULPT.

In addition to CRS, the ULPT can also broadcast the CSI-RS for use in networks with split control- and user-planes for example, and which can be used in both frame structure 1 (FDD) and frame structure 2 (TDD). In an example, the ULPT can be designed with low-complexity circuits to generate CSI-RS.

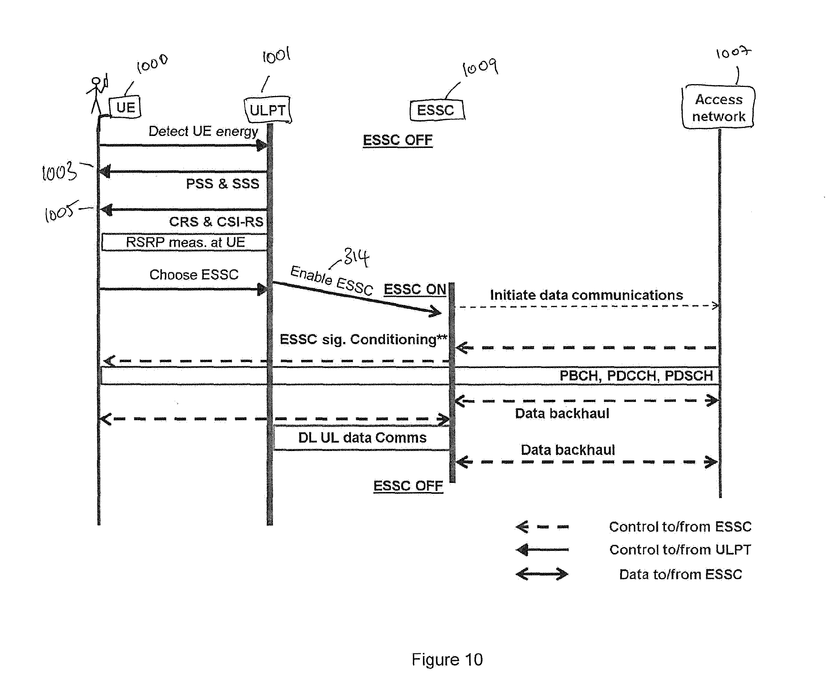

According to an example, the ULPT initiates cellular access the synchronization and reference signals. With reference to figure 10, which is a schematic representation of a message flow according to an example, in an ULPT based setup:

ULPT 1001 can detect the presence of a UE 1000 using detector such as a sniffer for example (not shown). The ULPT 1001 periodically transmits the PSS signal sequence 1003. Any UE that is not connected or idle listens to this PSS sequence to synchronize on a slot level. SSS sequence from ULPT to UE: The ULPT communicates two synchronization sequences to synchronize the UE 1000 on a frame level, distinguish TDD/FDD communication mode, CP length and physical layer identity.

Common reference signals from ULPT to UE: Once the UE 1000 synchronizes with the ULPT 1001 on the symbol level, the ULPT 1001 generates a set of CRS signals 1005 to facilitate channel estimation and cell selection for the UE 1000. Depending on the number of antenna setup, the OFDM symbol number and slot number, a cell specific Gold coded sequence is transmitted from ULPT 1001. In the case of split control/user plane, the reference symbols to estimate the channel state information (CSI-RS) is communicated from ULPT 1001to UE 1000.

PBCH from network to ESSC to UE: The network 1007 broadcasts cell (i.e. ESSC) specific information through the ESSC 1009 to the UE 1000. At this stage, the ESSC 1009 is enabled and the ESSC 1009 takes over the network access procedure corresponding to higher layers. The network 1007 specifies information regarding channels allocated and control signals. Dynamic allocation of user data from network 1007 to UE 1000 can be performed via the ESSC 1009 using the downlink shared channel.

Thus, as can be seen with reference to figure 10, ULPT 1001 performs the entire sycnhronisation and cell reselection process while the ESSC 1009 is asleep, thus significantly reducing the power consumption. ULPT 1001 not only broadcasts to UE 1000 but also enable it to estimate the RSSI values and wireless channel. The communication chain of the ESSC 1009 is excluded from any overhead control which results in significant improvement of ESSC energy-efficiency at low costs. The main cell can thus go into a sleep state while estimating cell (re)selection, configuration and synchronization actions. By using an ultra-low power transceiver 1001 able to recognize cell-identity specific commands and implement them in an energy-efficient manner without using any sort of energy-intensive and cost-ineffective digital processing significant energy savings can be achieved. A low-complexity physical implementation for future networks with split control/data plane and enabled sleep modes is thus provided. Thus, it facilitates network deployment, mitigates radio-link and handover failures, and simplifies cell identification.

**Claims**

1.  A transceiver for controlling a first network node, comprising:

    a detector operable to detect the presence of or a control signal from a second network node or a user equipment (UE);
    a broadcast signal generator to generate first and second downlink physical channel broadcast signals periodically or in response to the detected control signal; and
    a controller operable to enable the first network node from an inactive state so as to serve the UE in response to a node selection signal from the UE.

2.  A transceiver as claimed in claim 1, wherein the first downlink physical channel broadcast signal is a primary synchronisation signal and the broadcast signal generator is operable to synchronise a sequence for the primary synchronisation signal using a clock signal of the first network node.

3.  A transceiver as claimed in claim 1 or 2, wherein the second downlink physical channel broadcast signal is a secondary synchronisation signal and the broadcast signal generator is operable generate a sequence for the secondary synchronisation signal using a polynomial generator synchronised with a clock signal of the first network node.

4. A transceiver as claimed in claim 2, wherein the broadcast signal generator is operable to generate the sequence using a lookup table.

5. A transceiver as claimed in any preceding claim, wherein the broadcast signal generator is operable to generate multiple common reference symbols to be broadcast using the transceiver for channel estimation at the UE.

6. A transceiver as claimed in any preceding claim, wherein the transceiver is operable to receive a master clock signal from the second node.

7. A first node in a telecommunications system, the first node comprising:

a transceiver for controlling the first node, the transceiver including a detector operable to detect the presence of or a control signal from a second network node or a user equipment (UE);
a broadcast signal generator to generate first and second downlink physical channel broadcast signals periodically or in response to the detected control signal; and
a controller operable to enable the first node so as to serve the UE in response to a node selection signal from the UE.

8. A first node as claimed in claim 7, further including an autonomous sustainable energy source operable to power the first node.

9. A first node claimed in claim 7 or 8, wherein the first node is operable to communicate with a core network portion of the telecommunications system using a wireless backhaul.

10. A telecommunications system, comprising:

a second network node; and
a first network node including a transceiver for controlling the first node, the transceiver including a detector operable to detect the presence of or a control signal from the second network node or a user equipment (UE);
a broadcast signal generator to generate first and second downlink physical channel broadcast signals periodically or in response to the detected control signal; and
a controller operable to enable the first node so as to serve the UE in response to a node selection signal from the UE.

11. A telecommunications system as claimed in claim 10, further comprising a wireless backhaul between a core network portion of the system and the first network node.

12. A method, in a telecommunications system, for activating a first node, the method comprising:

detecting the presence of or a control signal from a second network node or a user equipment (UE) at the first node;
generating first and second downlink physical channel broadcast signals periodically or in response to the detected control signal;
receiving a node selection signal from the UE at the first node; and
activating the first node so as to serve the UE in response to the selection signal.

13. A method as claimed in claim 12, wherein the first and second downlink physical channel broadcast signals are primary and secondary synchronisation signal generated using a broadcast signal generator of a transceiver of the first node.

14. A method as claimed in claim 13, further comprising:

synchronising a sequence for the primary synchronisation signal using a clock signal of the first network node.

**15.** A method as claimed in claim 13 or 14, further comprising:

generating a sequence for the secondary synchronisation signal using a polynomial generator synchronised with a clock signal of the first network node.

Figure 1

Figure 2

Figure 3

EP 2 993 944 A1

Chip Enable

405

400

407

PSS generate

401

Clock signal

403

Cell Identity

M-seq 1

M-seq 2

SSS gen.

409

CRS gen.

411

413

64 point IFFT transform

415

Figure 4

Figure 5

**Clock signal** 401

407

6 bit counter

64 entry ROM LUT

Frame sync

PSS sequence

a

**Clock signal** 401

407

6 bit counter

OFDM modulated PSS

64 entry ROM LUT

Frame sync

Direct modulation to RF

b

Figure 6

Figure 7

EP 2 993 944 A1

| Slot 0 | Slot 10 |
|---|---|

$s_0^{(m_0)}(n)$ → X → SSC1
$c_0(n)$

$s_1^{(m_1)}(n)$ → X → X → SSC2
$c_1(n)$ , $z_1^{(m_0)}(n)$

$s_1^{(m_1)}(n)$ → X → SSC1
$c_0(n)$

$s_0^{(m_0)}(n)$ → X → X → SSC2
$c_1(n)$ , $z_1^{(m_1)}(n)$

$s_0^{(m_0)}$ = First cyclic shift (function of $m_0$) of first m-sequence $s$

$s_1^{(m_1)}$ = Second cyclic shift (function of $m_1$) of first m-sequence $s$

$c_0$ = First scrambling sequence

$c_1$ = Second scrambling sequence

$z_1^{(m_0)}$ = First cyclic shift (function of $m_0$) of m-sequence $z$

$z_1^{(m_1)}$ = Second cyclic shift (function of $m_1$) of m-sequence $z$

Legend

Figure 8

EP 2 993 944 A1

900

M seq output

$\{c[0], c[1]\}$                                    $\{c[2m], c[2m+1]\}$

M-seq to QPSK          – – – –          M-seq to QPSK        901n

901a

Cell Identity ▮ → RAM + interleaver        905

903

$r_{l,nk}(m)$

Resource Block alignment        907

413

M-seq to QPSK modulator        909

$c(2m)$ → ⊕ ↓1
                              ⊕ → Σ →
$c(2m+1)$ → ⊕ → ⊕
                        ↑$\pi/2$

Figure 9

Figure 10

EP 2 993 944 A1

Europäisches
Patentamt
European
Patent Office
Office européen
des brevets

**EUROPEAN SEARCH REPORT**

Application Number

EP 14 30 6360

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/042375 A2 (ALCATEL LUCENT [FR]; SHEN GANG [CN]; WANG WEI [CN]; ZHENG WU [CN]) 5 April 2012 (2012-04-05) <br> * page 8, line 1 - line 8 * <br> * page 2, paragraph 1 - paragraph 2 * <br> ----- | 1-15 | INV. <br> H04W52/02 |
| A | SHI YI ET AL: "A flexible wireless backhaul solution for emerging small cells networks", <br> 2014 IEEE INTERNATIONAL CONFERENCE ON SIGNAL PROCESSING, COMMUNICATIONS AND COMPUTING (ICSPCC), IEEE, <br> 5 August 2014 (2014-08-05), pages 591-596, XP032708919, <br> DOI: 10.1109/ICSPCC.2014.6986262 <br> ISBN: 978-1-4799-5272-4 <br> [retrieved on 2014-12-15] <br> * the whole document * <br> ----- | 9,11 | |
| A | HOLGER CLAUSSEN ET AL: "Dynamic idle mode procedures for femtocells", <br> BELL LABS TECHNICAL JOURNAL, WILEY, CA, US, <br> vol. 15, no. 2, <br> 1 September 2010 (2010-09-01), pages 95-116, XP001555948, <br> ISSN: 1089-7089, DOI: 10.1002/BLTJ.20443 <br> * page 101, paragraph 2 - right-hand column * <br> ----- <br> -/-- | 1-15 | TECHNICAL FIELDS SEARCHED (IPC) <br><br> H04W |

The present search report has been drawn up for all claims

| Place of search | Date of completion of the search | Examiner |
|---|---|---|
| Berlin | 26 March 2015 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 14 30 6360

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "Femto Cell Systems Overview", 3GPP2 DRAFT; S10-20100125-004A__(QC) _FEMTO SYSTEMS OVERVIEW DRAFT_02, 3RD GENERATION PARTNERSHIP PROJECT 2, 3GPP2, 2500 WILSON BOULEVARD, SUITE 300, ARLINGTON, VIRGINIA 22201 ; USA , vol. TSGS 26 January 2010 (2010-01-26), pages 1-27, XP062219745, Retrieved from the Internet: URL:http://ftp.3gpp2.org/TSGS/Working/_2010/2010-01-Bangkok/WG1 Requirements/ [retrieved on 2010-01-26] * page 22 * ----- | 6 | |
| A | LG ELECTRONICS: "Further discussion on network listening for intra-operator scenarios", 3GPP DRAFT; R1-142140, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Seoul, Korea; 20140519 - 20140523 18 May 2014 (2014-05-18), XP050789260, Retrieved from the Internet: URL:http://www.3gpp.org/ftp/Meetings_3GPP_SYNC/RAN1/RAN1/Docs/ [retrieved on 2014-05-18] * paragraph [02.1] * ----- -/-- | 6 | TECHNICAL FIELDS SEARCHED (IPC) |

The present search report has been drawn up for all claims

| Place of search | Date of completion of the search | Examiner |
|---|---|---|
| Berlin | 26 March 2015 | Douglas, Ian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt
European
Patent Office
Office européen
des brevets

**EUROPEAN SEARCH REPORT**

Application Number

EP 14 30 6360

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALCATEL-LUCENT ET AL: "System analysis of Radio Interface Based Synchronization (RIBS)", 3GPP DRAFT; R1-142046_RIBS_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Shenzhen, China; 20140331 - 20140404 18 May 2014 (2014-05-18), XP050789166, Retrieved from the Internet: URL:http://www.3gpp.org/ftp/Meetings_3GPP_SYNC/RAN1/RAN1/Docs/ [retrieved on 2014-05-18] * page 2 * ----- | 6 | |

TECHNICAL FIELDS
SEARCHED      (IPC)

The present search report has been drawn up for all claims

| Place of search | Date of completion of the search | Examiner |
|---|---|---|
| Berlin | 26 March 2015 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 6360

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2015

| Patent document cited in search report | | Publication date | Patent family member(s) | | Publication date |
|---|---|---|---|---|---|
| WO 2012042375 | A2 | 05-04-2012 | CN | 102421172 A | 18-04-2012 |
| | | | EP | 2622936 A2 | 07-08-2013 |
| | | | JP | 5579328 B2 | 27-08-2014 |
| | | | JP | 2013540392 A | 31-10-2013 |
| | | | KR | 20130069827 A | 26-06-2013 |
| | | | US | 2013189932 A1 | 25-07-2013 |
| | | | WO | 2012042375 A2 | 05-04-2012 |

EPO FORM P0459

For more details about this annex : see Official Journal of the European Patent Office, No. 12/82